# FASCICULE DE BREVET EUROPEEN

(11) **EP 2 326 873 B1**
(45) Date de publication et mention de la délivrance du brevet: **03.08.2016**
(21) Numéro de dépôt: 09787098.4
(22) Date de dépôt: 04.09.2009
(51) Int. Cl.: F23C 3/00, F23C 9/00, F23L 15/04

(54) **RECUPERATEUR POUR BRULEUR A TUBE RADIANT**
REKUPERATOR FÜR STRAHLUNGSROHRBRENNER
RECUPERATOR FOR A RADIATING TUBE BURNER

(30) Priorité: 10.09.2008 FR 0804970; 12.09.2008 FR 0805016
(43) Date de publication de la demande: 01.06.2011
(73) Titulaire: Fives Stein, 94701 Maisons Alfort Cedex (FR)
(72) Inventeur: PITOCCO, Alphonse, F-55000 Vavincourt (FR); SEDMAK, Patrice, F-55800 Laimont (FR); MAGNE, Stéphane, F-77167 Poligny (FR)
(74) Mandataire: Cabinet Armengaud Aîné
(86) Numéro de dépôt international: PCT/IB2009/053860
(87) Numéro de publication internationale: WO 2010/029477

(56) Documents cités:
- WO-A-2008/022722
- DE-C- 892 738
- US-A- 4 410 037
- US-A- 4 800 866
- US-A- 4 877 396

## Description

L'invention est relative à un récupérateur pour brûleur à tube radiant présentant une conduite de brûleur et une conduite d'échappement, le brûleur étant placé en entrée de la conduite de brûleur, le récupérateur étant disposé en sortie de la conduite d'échappement.

Le récupérateur visé par l'invention est du genre de ceux qui comprennent un échangeur de chaleur placé à l'intérieur d'un conduit de raccordement prévu pour être relié à la conduite d'échappement afin d'assurer un préchauffage à contre-courant de l'air de combustion par une partie des fumées, l'échangeur comportant :
- un tronçon aller pour diriger l'air à préchauffer vers un embout placé à l'extrémité du récupérateur du côté de l'arrivée des fumées,
- et un tronçon retour s'ouvrant vers une canalisation d'alimentation en air du brûleur, l'embout définissant un trajet pour inverser le sens d'écoulement de l'air de combustion et le diriger vers le tronçon retour,
l'ensemble étant prévu pour qu'une partie des fumées soit entraînée par, et se mélange avec, l'air de combustion de manière à réduire le niveau d'oxydes d'azote des produits de combustion.

Un récupérateur de chaleur de ce genre est montré par FR-A-2 780 770. D'une manière générale, les tubes radiants à brûleur sont équipés d'un système de récupération de chaleur sur les fumées de type échangeur à ailettes.

WO 2008/022722 montre également un récupérateur de chaleur dans lequel le tronçon aller est entouré par le tronçon retour. L'air de combustion n'est réchauffé par les fumées que lors du trajet retour.

Les récupérateurs proposés jusqu'à ce jour demandent à être améliorés afin :
- d'accroître leur performance thermique, et le transfert de chaleur entre les fumées et l'air de combustion,
- d'augmenter le taux de recirculation de fumées dans l'air de combustion de sorte de réduire les émissions d'oxydes d'azote et d'améliorer l'homogénéité de température du tube radiant,
- de limiter les pertes de charge de sorte de diminuer la pression requise sur l'air de combustion, et le soutirage nécessaire sur les fumées pour véhiculer les fluides,
- de maîtriser les pertes de charge,
- de fiabiliser l'allumage à froid du brûleur,
- et de diminuer le coût de fabrication.

Selon l'invention, un récupérateur de chaleur pour brûleur à tube radiant présentant une conduite de brûleur et une conduite d'échappement, le brûleur étant placé en entrée de la conduite de brûleur, le récupérateur étant disposé en sortie de la conduite d'échappement, et comprenant un échangeur de chaleur placé à l'intérieur d'un conduit de raccordement prévu pour être relié à la conduite d'échappement afin d'assurer un préchauffage à contre-courant de l'air de combustion par une partie des fumées, l'échangeur comportant :
- un tronçon aller pour diriger l'air à préchauffer vers un embout placé à l'extrémité du récupérateur du côté de l'arrivée des fumées,
- et un tronçon retour s'ouvrant vers une canalisation d'alimentation en air du brûleur, l'embout définissant un trajet pour inverser le sens d'écoulement de l'air de combustion et le diriger vers le tronçon retour,
l'échangeur de chaleur occupant une partie seulement de la section transversale du conduit de raccordement, l'autre partie restant libre pour le passage des fumées vers une évacuation,
l'ensemble étant prévu pour qu'une partie des fumées soit entraînée par, et se mélange avec, l'air de combustion,
est caractérisé en ce que :
- le tronçon aller de l'échangeur comporte une pluralité de tubes échangeurs, parallèles à l'axe du conduit de raccordement, pour le passage de l'air de combustion, les fumées échangeant de la chaleur avec l'air au travers des tubes échangeurs, les deux fluides ayant des écoulements parallèles, en sens contraire,
- les tubes échangeurs débouchent à l'intérieur de l'embout,
- le circuit d'air est disposé en « épingle », les tubes échangeurs du tronçon aller étant situés radialement à l'extérieur du tronçon retour.

Le préchauffage de l'air par les fumées se poursuit dans ce tronçon retour par un échange de chaleur directe résultant du mélange de l'air avec des fumées plus chaudes et par un échange indirecte avec les fumées circulant autour du tronçon retour.

Avantageusement, les tubes échangeurs sont regroupés dans une zone de l'espace compris entre le tronçon retour et le conduit de raccordement, ou la conduite d'échappement. Le tronçon retour peut être formé par un tube de section transversale suffisante pour l'écoulement de l'air provenant des tubes échangeurs et de la partie recirculée des fumées.

Selon une première possibilité, le tube du tronçon de retour est relié de manière étanche à l'embout, l'autre extrémité axiale du tube étant fermée, le tronçon retour s'ouvrant transversalement par un éjecteur placé en vis-à-vis de la canalisation d'alimentation en air du brûleur.

Selon une autre possibilité, le tube du tronçon retour est ouvert du côté de l'arrivée des fumées et l'embout comporte une tubulure de sortie recourbée en forme de crosse regroupant les débits des tubes collecteurs et débouchant dans l'extrémité ouverte du tronçon retour, dans lequel s'effectue un mélange de l'air et d'une partie des fumées. Le tronçon retour peut être recourbé, en particulier à angle droit, pour sortir du conduit de raccordement.

Le récupérateur peut comporter une canalisation d'entrée d'air entourée d'une enveloppe tubulaire fermée à son extrémité intérieure et ouverte à son autre extrémité dans une chambre d'entrée d'air pour les tubes échangeurs, l'enveloppe tubulaire étant entourée par des fumées, de sorte que l'air de combustion effectue un premier trajet aller retour de préchauffage avant d'entrer dans les tubes échangeurs.

L'embout peut comprendre une partie cylindrique prolongée en amont par un entonnoir qui se raccorde au tube de mélange, l'entonnoir comportant dans sa partie centrale un prolongement tubulaire formant injecteur pour l'air de combustion, ce prolongement étant supporté par des manchons orientés radialement mettant en communication un espace annulaire où débouchent les tubes de l'échangeur et l'intérieur du prolongement tubulaire

Le récupérateur est avantageusement réalisé en mécano-soudage avec des éléments tubulaires et des pièces de tôle en acier inoxydable. Un hélicoïde peut être disposé dans au moins un tube échangeur.

Les tubes échangeurs peuvent être entourés par des tubes enveloppes, l'air de combustion circulant dans les tubes échangeurs tandis que les fumées circulent dans les passages annulaires compris entre les tubes échangeurs et les tubes enveloppes. Une cloison traversée de manière étanche par les tubes enveloppes peut être prévue pour délimiter, à l'extrémité du conduit de raccordement ou de la conduite d'échappement, une chambre reliée à l'évacuation des fumées, les tubes enveloppes débouchant dans cette chambre.

Le récupérateur peut comporter une conduite de dérivation pour court-circuiter une partie de l'air froid directement au brûleur sans passer par le récupérateur tant que le tube radiant n'a pas atteint la température d'auto-inflammation du combustible, avec un organe de sectionnement prévu sur l'air destiné à l'allumage du brûleur.

Les tubes échangeurs peuvent avoir des diamètres différents, avec par exemple un diamètre plus important en partie supérieure et plus faible en partie inférieure. De préférence, les tubes échangeurs ne sont soudés qu'à une extrémité, l'extrémité chaude reliée à l'embout, tandis qu'à l'autre extrémité ils sont engagés de manière coulissante étanche dans une paroi.

Les tubes échangeurs sont répartis judicieusement de manière à optimiser les sections de passage des fluides, par exemple suivant un arc de cercle centré sur l'axe de la conduite d'échappement, et à réduire la perte de charge sur des fumées circulant dans la section libre.

Selon une variante, l'ensemble des tubes échangeurs est entouré par une paroi enveloppe, et les fumées circulent dans la zone comprise entre la surface extérieure des tubes échangeurs et la paroi enveloppe. Cette variante est mieux adaptée au fonctionnement en gaz de sidérurgie (type gaz de four à coke et gaz de hauts fourneaux) en raison des gros volumes de fumées créés.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une coupe schématique verticale partielle d'un four équipé d'un brûleur à récupérateur de chaleur.
Fig. 2 est une coupe schématique axiale verticale avec parties en extérieur d'un récupérateur de chaleur selon l'invention.
Fig. 3 est une vue schématique de droite par rapport à Fig. 2, à plus grande échelle.
Fig. 4 est une vue schématique en coupe au niveau de l'injecteur 18 selon Fig. 3,
Fig. 5 est une vue semblable à Fig. 4 d'une variante de réalisation.
Fig. 6 est une vue semblable à Fig. 4 d'une autre variante de réalisation.
Fig. 7 est une coupe schématique axiale verticale, selon la ligne VII-VII de Fig.8, d'une variante du récupérateur de chaleur selon l'invention avec parties arrachées.
Fig.8 est une section, à plus grande échelle, selon la ligne VIII-VIII de Fig.7, et
Fig.9 est une vue en perspective, en coupe axiale verticale, d'une autre variante de récupérateur selon l'invention.

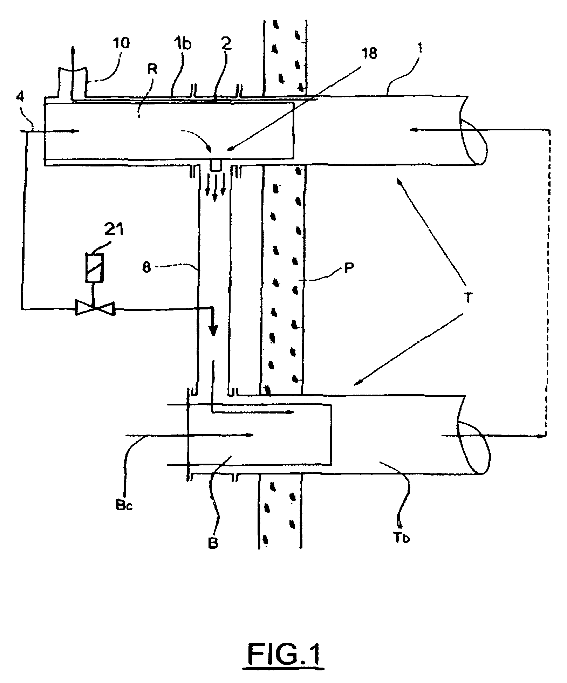

En se reportant aux dessins, notamment à Fig. 1, on peut voir un brûleur B à tube radiant T. Le tube T comporte une conduite de brûleur Tb à l'entrée de laquelle est installé le brûleur B. Le tube T traverse une paroi P d'un four, s'étend dans la chambre du four, et ressort à travers la paroi par une conduite d'échappement 1. Le brûleur B est alimenté en combustible par une conduite Bc. La flamme du brûleur B se développe dans le tube radiant T et les fumées (gaz de combustion) parcourent ce tube pour assurer le chauffage du four. Les fumées sont dirigées, dans le tube T, vers la conduite 1.

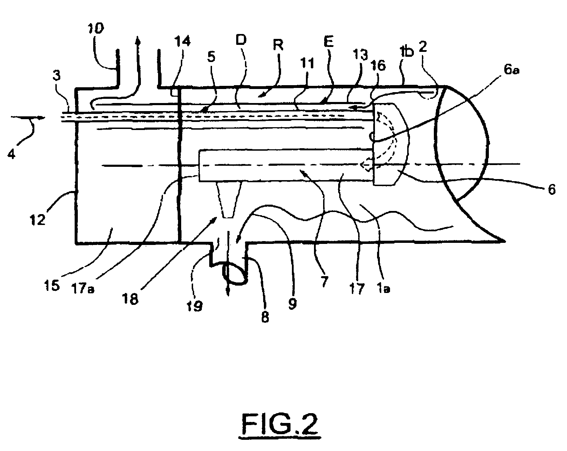

Un récupérateur de chaleur R est disposé en sortie de la conduite d'échappement 1. Comme visible sur Fig. 2, le récupérateur R comprend un échangeur de chaleur E placé à l'intérieur d'un conduit de raccordement 1 b prévu pour être relié par bride (non représentée sur Fig.2) à la conduite d'échappement afin d' assurer un préchauffage à contre-courant de l'air de combustion par une partie 2 des fumées partant à l'échappement.

L'air froid de combustion entre par une extrémité 3 de l'échangeur E suivant le sens de la flèche 4 et est dirigé, par un tronçon aller 5 de l'échangeur vers un embout 6 placé à l'extrémité du récupérateur du côté de l'arrivée des fumées. L'échangeur E comporte un tronçon retour 7 s'ouvrant vers une canalisation 8 d'alimentation en air du brûleur. L'embout 6 définit un trajet pour inverser le sens d'écoulement de l'air de combustion provenant du tronçon aller 5 et pour le diriger vers le tronçon retour 7.

L'ensemble est prévu pour qu'une partie 9 des fumées de combustion soit entraînée par l'air d'alimentation du brûleur et se mélange avec cet air dans la canalisation 8.

L'échangeur de chaleur E occupe une partie seulement de la section transversale du conduit de raccordement 1 b, ou de la conduite d'échappement 1, comme bien visible sur Fig. 2. L'autre partie 1a de la section transversale reste libre. Le tronçon retour 7 de l'échangeur est décalé radialement par rapport au tronçon aller 5. Les tronçons aller 5 et retour 7 sont respectivement extérieurs l'un à l'autre. Le tronçon retour 7 baigne dans la partie 9 des fumées.

L'air de combustion est réchauffé, lors du trajet aller 5, par les fumées à travers la paroi du tronçon aller 5 entouré par les fumées. Le réchauffage de l'air par les fumées se poursuit lors du trajet retour à travers la paroi du tronçon retour 7.

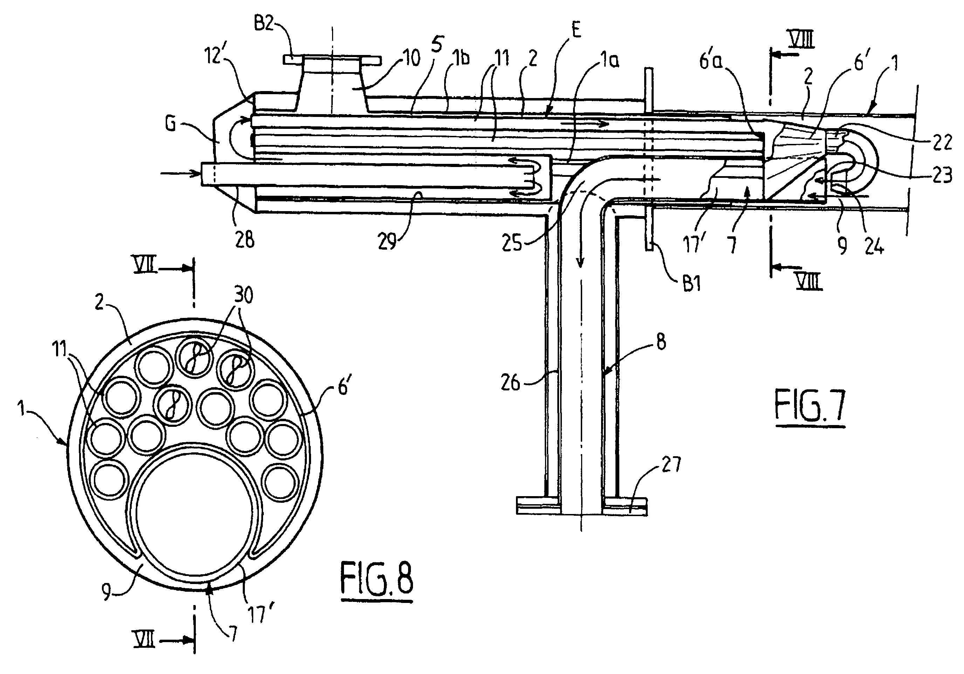

La partie amont du récupérateur, située au niveau de l'embout 6, est prévue pour séparer les fumées entre la partie 2 qui sera évacuée par une sortie 10 et la partie 9 qui sera mélangée à l'air de combustion. La sortie 10, comme illustré sur Fig.7, est munie d'une bride de raccordement B2 à une cheminée (non représentée). La partie 9 des fumées circule dans la section libre 1a entre l'échangeur E et la surface interne du conduit de raccordement 1b, ou de la conduite d'échappement 1.

Le récupérateur comporte un passage D pour guider la partie 2 des fumées depuis l'amont de l'échangeur E jusqu'à la sortie 10.

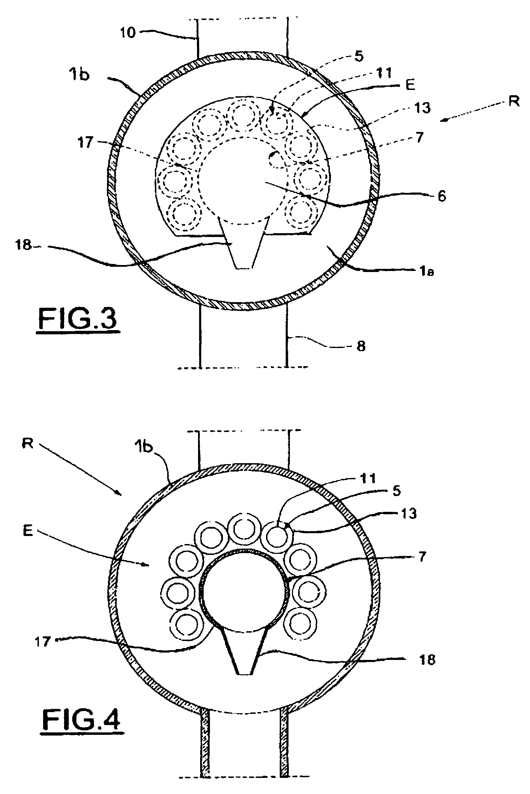

Comme montré par Fig. 2 et 3, le tronçon aller 5 de l'échangeur comporte une pluralité de tubes échangeurs 11, parallèles à l'axe géométrique du conduit 1b et de la conduite 1. Les centres des sections droites des tubes 11, selon un premier exemple de réalisation, sont disposés sur un arc de cercle centré sur l'axe de la conduite 1 comme visible sur Fig. 3 et 4, cet arc de cercle s'étendant sur un peu plus de 180°. Les tubes échangeurs 11 sont prévus pour le passage de l'un des fluides : air de combustion ou fumées. Dans l'exemple illustré sur Fig. 2 à 4, les tubes échangeurs 11 sont prévus pour le passage de l'air de combustion et traversent, de manière étanche, une paroi de fond transversale 12 fermant la partie aval (selon le sens d'écoulement des fumées) du conduit 1 b. L'entrée de l'air de combustion comporte une boîte de distribution (non représentée) qui communique avec les différentes extrémités 3 des tubes 11 en saillie à l'extérieur de la paroi 12. A cet endroit l'étanchéité est assurée de manière glissante sur les tubes 11 de manière à ne pas retenir les dilatations thermiques. Cela permet ainsi un allongement des tubes indépendants les uns des autres.

Selon Fig. 2 à 4, les tubes échangeurs 11 sont entourés individuellement par des tubes enveloppes 13 coaxiaux qui traversent, de manière étanche, une cloison 14 fermant le conduit 1 b en amont de la sortie 10. Une chambre d'évacuation 15 est formée entre la cloison 14 et la paroi 12, cette chambre 15 communiquant avec la sortie 10. Les tubes enveloppes 13 sont disposés à une certaine distance radiale de la surface interne de la conduite 1, et s'arrêtent avant la paroi 12 de manière à déboucher dans la chambre 15. A leur autre extrémité, les tubes enveloppes 13 s'arrêtent à distance d'une paroi transversale de fond 6a de l'embout 6 de sorte qu'un espace annulaire 16 est formé entre l'extrémité amont de chaque tube 13 et l'embout 6, permettant l'entrée de la partie 2 des fumées dans les passages annulaires D compris entre la surface extérieure des tubes échangeurs 11 et la surface intérieure des tubes enveloppes 13. La partie 2 évacuée des fumées sort à l'extrémité aval des tubes 13 et s'échappe par la sortie 10.

Selon l'exemple de réalisation de Fig. 3, l'embout 6 présente un contour en arc de cercle, à distance radiale de la surface interne du conduit 1b. Les tubes échangeurs 11 débouchent à l'intérieur de l'embout 6. Les extrémités des tubes 11 sont, de préférence, soudées contre la paroi 6a percée d'orifices au droit de chaque tube 11.

Le tronçon retour 7 est formé par un tube cylindrique 17 d'axe géométrique parallèle à l'axe géométrique du conduit 1b. La section transversale du tube 17 est, de préférence, au moins égale à la somme des sections transversales des tubes échangeurs 11. La paroi 6a comporte un orifice de communication avec le tube 17 relié de manière étanche, de préférence par soudage, à cette paroi 6a. L'autre extrémité axiale du tube 17 est fermée par une paroi 17a, au voisinage de la cloison 14.

A son extrémité voisine de la paroi 17a, le tube 17 est muni d'un éjecteur transversal 18 d'air préchauffé. Cet éjecteur est formé par une buse tronconique de section droite décroissante vers l'extérieur, visant à souffler l'air préchauffé en direction du brûleur via la canalisation 8. L'éjecteur 18 s'arrête à une certaine distance du conduit 1 b ou de la conduite 1 de sorte qu'une zone annulaire 19 est présente entre la sortie de l'éjecteur 18 et l'entrée de la conduite 8. L'air sortant de l'éjecteur 18 crée un effet d'aspiration de la partie 9 des fumées et l'entraîne dans la conduite d'alimentation 8.

L'échangeur E peut être entièrement réalisé avec des tubes et des tôles en acier inoxydable.

Le fonctionnement du récupérateur R est le suivant.

L'air froid pour la combustion circule, et se réchauffe, dans les tubes échangeurs 11 à contre-courant de la partie 2 des fumées chaudes qui s'écoulent dans les passages D entre les tubes 11 et les tubes enveloppes 13. Le sens de circulation de l'air préchauffé est inversé dans l'embout 6 et l'air revient vers l'éjecteur 18 suivant le tronçon retour 7 se trouvant dans la partie 9 des fumées chaudes. Le préchauffage de l'air se poursuit dans ce tronçon retour 7. L'air préchauffé sort par l'éjecteur 18 et se mélange avec la partie 9 des fumées entraînée dans la conduite 8.

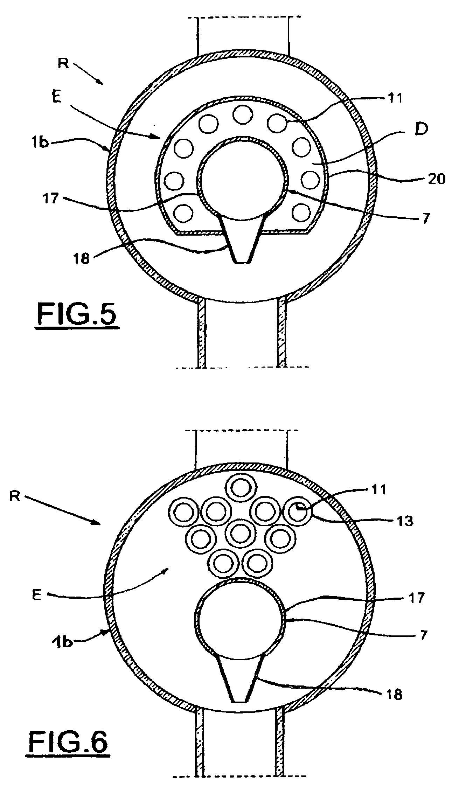

Fig. 5 montre une variante de réalisation selon laquelle l'ensemble des tubes échangeurs 11, dans lesquels circule l'air de combustion à préchauffer, est entouré par une enveloppe externe 20 commune. Les fumées circulent dans le passage D compris entre l'enveloppe externe 20 et la surface extérieure des tubes 11. Le tronçon retour 7 est équipé de l'éjecteur 18. L'ensemble de l'échangeur E de Fig. 5 est installé dans le conduit de raccordement 1 b ou la conduite 1 d'échappement. Cette configuration admet de plus gros volumes de fumées en raison de sa faible perte de charge et se prête donc bien à l'utilisation avec les combustibles pauvres de sidérurgie.

Fig. 6 montre une autre variante de réalisation avec un agencement des tubes échangeurs différent pour accroître la surface d'échange sans augmentation de la perte de charge des fumées recyclées. Les tubes échangeurs 11, 13 sont regroupés dans une zone de l'espace compris entre le tronçon 7 et la conduite 1. Cette configuration permet d'augmenter le nombre de tubes échangeurs dans la conduite d'échappement et permet un préchauffage plus important de l'air de combustion sans réduire la proportion de fumées recirculée.

Les débits de fumées et d'air de combustion circulant dans les tubes échangeurs sont constants pour l'ensemble des variantes de réalisation selon l'invention car ils ne dépendent que du régime de fonctionnement du brûleur. Avec un tube supplémentaire selon la variante de Fig.6, la vitesse d'écoulement des gaz dans les tubes est légèrement plus faible mais la surface d'échange est plus importante. La surface étant prépondérante sur la vitesse pour le niveau d'échange par convection, dans notre gamme de fonctionnement, il en résulte une efficacité thermique plus importante de l'échangeur selon l'exemple de réalisation de Fig. 6 malgré une moindre vitesse d'écoulement des fumées et de l'air de combustion.

On comprend aisément qu'une optimisation est nécessaire pour obtenir le meilleur compromis entre la surface d'échange (nombre, diamètre et longueur des tubes) et les vitesses d'écoulement de sorte d'obtenir un bon équilibre entre encombrement et pertes de charge.

Dans la variante de réalisation selon Fig. 6, le tronçon retour 7 n'est plus centré dans la conduite d'échappement mais décalé vers le bas de sorte que les tubes échangeurs se trouvent en partie supérieure.

Le fonctionnement des échangeurs de Fig. 5 et 6 est semblable à celui de l'échangeur des Fig. 2 à 4.

Avantageusement, il est prévu de court-circuiter (by-passer) une partie de l'air froid directement au brûleur sans passer par le récupérateur tant que le tube radiant n'a pas atteint la température d'auto-inflammation du combustible. Ce système de court-circuit (by-pass) nécessite l'emploi d'un organe de sectionnement 21 (Fig.1) sur l'air destiné à l'allumage du brûleur.

En se reportant aux Figs. 7 et 8, on peut voir une autre variante de réalisation du récupérateur selon l'invention. Les éléments jouant un même rôle que ceux décrits dans les réalisations précédentes sont désignés par les mêmes références numériques éventuellement affectées d'une apostrophe '. Leur description ne sera pas reprise ou ne sera effectuée que succinctement. Les tubes échangeurs 11 s'étendent, dans le conduit de raccordement 1b, depuis une paroi d'extrémité 12' située sur la gauche de Fig. 7, qu'ils traversent de manière étanche, avec possibilité de coulissement, pour déboucher dans une chambre G d'entrée d'air pour les tubes 11. Ces tubes échangeurs 11 ne sont pas entourés de tubes enveloppes coaxiaux. Selon Fig.7 le conduit 1b est muni d'une bride B1 de raccordement à la conduite 1. L'échangeur E fait saillie en partie au-delà de la bride B1, et cette partie en saillie est engagée dans la conduite 1 coaxiale au conduit 1b. Comme visible sur Fig. 8, les tubes 11 sont groupés dans un espace en forme de croissant compris entre la paroi de la conduite 1, ou selon le cas du conduit 1 b, et le tube 17' formant le tronçon retour 7.

L'embout 6' est en forme de tronc de cône, avec une grande base constituée par la plaque 6'a qui comporte des ouvertures correspondant aux sections des tubes 11. Ces tubes 11 sont soudés à la plaque 6'a pour déboucher de manière étanche à l'intérieur de l'embout 6'. La petite base de l'embout 6' est raccordée à une tubulure 22 en forme de crosse, constituant une sortie recourbée à 180° qui regroupe les flux d'air provenant des divers tubes 11.

L'extrémité 23 du tronçon de retour 7 (tube 17') est ouverte face à l'extrémité 24 de la crosse 22. L'air sortant de la crosse 22 entre dans le tube 17' et se mélange avec la partie 9 des fumées, provenant de l'amont, qui entre dans ce tube 17'. Le mélange de l'air avec une partie des fumées permet d'abaisser le taux d'oxygène dans le comburant avec pour effet une diminution des NOx formés lors de la combustion. Ce mélange contribue également à réchauffer l'air.

Une partie des fumées passe dans l'espace libre 2 situé autour de l'embout 6', entre cet embout et la surface interne de la conduite 1 ou du conduit 1 b. Cette partie de fumées s'écoule autour des tubes 11, notamment dans l'espace 1a, en direction de la sortie 10, à contre-courant de l'air des tubes 11. Le tube 17' est également entouré par des fumées qui se dirigent vers la sortie 10.

Le tube 17' sort latéralement du conduit de raccordement en étant recourbé à angle droit selon un coude 25 prolongé par une tubulure de sortie 26 munie, à son extrémité libre, d'une bride 27 de raccordement à la tubulure d'air (non représentée) du brûleur.

L'entrée d'air dans les tubes 11 peut avoir lieu directement dans la chambre G. Toutefois, dans l'exemple de réalisation représenté, l'entrée d'air s'effectue par une canalisation 28 qui traverse la paroi 12' et qui est entourée, dans l'espace où se trouvent les fumées, par une enveloppe tubulaire 29, fermée à son extrémité intérieure, voisine du coude 25. La canalisation 28 s'arrête avant l'extrémité intérieure de l'enveloppe tubulaire 29 et est ouverte de manière à permettre à l'air entré d'effectuer un changement de direction à 180° pour revenir vers une ouverture de la paroi 12' autour de laquelle est fixée de manière étanche l'enveloppe tubulaire 29.

Comme l'enveloppe 29 est entourée de fumées, l'air qui circule en retour entre la canalisation 28 et la paroi intérieure de l'enveloppe 29 subit un premier préchauffage avant d'arriver dans la chambre G.

Cet aller-retour effectué par l'air entrant dans le double tube constitué par la canalisation 28 et l'enveloppe tubulaire 29 est optionnel. Il permet quand il est présent une économie d'énergie et une amélioration du rendement, au prix d'une augmentation de la perte de charge.

Pour améliorer le rendement et favoriser les échanges, on peut prévoir, à l'intérieur des tubes 11 comme illustré sur Fig. 8, des lames 30 métalliques torsadées en hélicoïde.

Le fonctionnement du réchauffeur des Figs. 7 et 8 est semblable à celui décrit à propos des figures précédentes.

Les flèches tracées sur Fig. 7 permettent de suivre les trajets de l'air et des fumées.

Selon la variante optionnelle, l'air entrant par la canalisation 28, après avoir fait un aller-retour, revient dans la chambre G et pénètre dans les tubes échangeurs 11, au nombre de treize selon l'exemple de Fig. 8. L'air se réchauffe dans ces tubes 11 par échange de chaleur avec les fumées qui lèchent la surface extérieure des tubes 11, à contre-courant. L'air ainsi réchauffé est recueilli dans l'embout 6' et fait demi-tour dans la partie 22 pour entrer dans le tube 17'. C'est à cet endroit que la recirculation de fumée s'opère. En déportant ainsi l'injecteur formé par la crosse 22 en bout de récupérateur, on profite d'une efficacité maximale de l'effet de recirculation.

Les treize tubes 11 sont baignés dans les fumées qui passent naturellement plutôt en partie inférieure constituant un passage préférentiel. Afin de limiter les passages préférentiels des fumées et de mieux remplir l'espace disponible, les tubes 11 peuvent avoir des diamètres différents, par exemple un diamètre plus important en partie supérieure et plus faible en partie inférieure de la section transversale. Le nombre de tubes 11 sera également adapté selon les dimensions du récupérateur.

Les dilatations différentielles entre tubes 11 peuvent s'opérer puisque ceux-ci ne sont soudés que du seul côté chaud, correspondant à la plaque 6'a. De l'autre côté les tubes 11 sont engagés de manière coulissante dans la paroi 12' constituée de préférence de trois plaques séparées par un joint isolant.

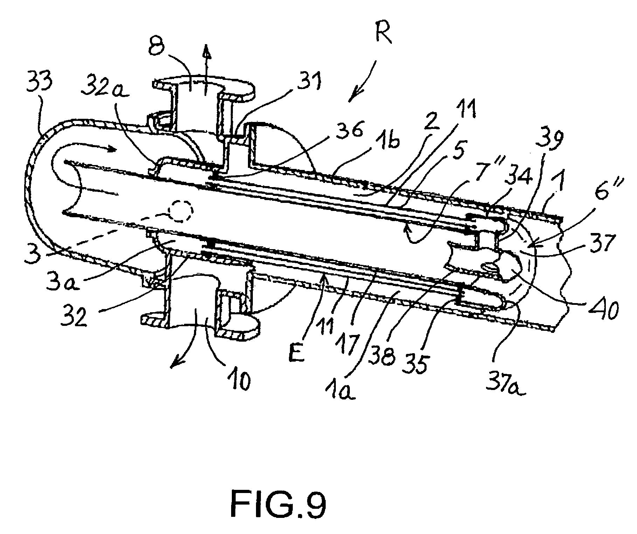

En se reportant à Fig.9, on peut voir un autre exemple de réalisation d'un récupérateur de chaleur selon l'invention. Les éléments identiques ou semblables à des éléments déjà décrits précédemment sont désignés par les mêmes références, éventuellement suivies de " et leur description ne sera pas reprise ou ne sera effectuée que succinctement.

Sur Fig. 9, il apparaît que le récupérateur R comporte un corps 31 cylindrique coaxial à la conduite d'échappement 1 reliée à ce corps. L'entrée d'air de combustion 3, prévue sur la partie non visible du corps située de l'autre côté du plan de coupe vertical, présente un axe géométrique horizontal orthogonal à l'axe géométrique du corps 31 et de la conduite 1. La sortie 10 du solde des produits de combustion présente un axe géométrique vertical et est orientée vers le bas tandis que la sortie 8 du mélange constitué de l'air de combustion et d'une partie des produits de combustion est diamétralement opposée à la sortie 10. L'entrée 3 et les sorties 8 et 10 sont munies d'une collerette formant bride de raccordement à une canalisation.

Comme visible sur Fig. 9, le corps 31 comporte des cloisons intérieures séparant différentes zones qui communiquent avec l'entrée 3 et les sorties 8 et 10. L'entrée 3 communique avec une chambre intérieure 3a déterminée par une cloison cylindrique 32 présentant un fond transversal 32a traversé de manière suffisamment étanche par le tronçon de retour 7" formé par le tube de mélange 17 qui se prolonge en aval au-delà du fond 32a. Un capuchon 33 coaxial au tube 17 est fixé au corps 31, notamment par une bride non représentée, pour coiffer l'extrémité aval du tube 17. L'espace annulaire compris entre la surface extérieure du tube 17 et la surface intérieure du capuchon 33 communique avec l'orifice 8 de sortie du mélange d'air de combustion et de produits de combustion. Le sens d'écoulement de ce mélange est inversé de 180° à la sortie du tube 17 pour se diriger vers la sortie 8.

L'embout 6" (Fig.9) comporte une partie cylindrique 34. L'extrémité aval de cette partie 34 est formée par une couronne circulaire 35 serrée sur le tube 17 et entourée serrée par la partie 34. Les tubes échangeurs 11 sont répartis autour du tube de mélange 17, parallèlement à ce dernier, et débouchent dans l'embout 6 " par des ouvertures prévues dans la couronne 35. A leur autre extrémité, les tubes 11 débouchent à travers une couronne circulaire 36 dans la chambre d'entrée d'air 3a. L'extrémité amont de la partie cylindrique 34 est munie d'un entonnoir 37 dont le bord périphérique amont 37a est recourbé à 180°. La paroi de l'entonnoir 37 forme une jupe sensiblement tronconique à partir du bord recourbé 37a et assure un raccordement entre le bord amont de la partie 34 et le tube de mélange 17 de plus petit diamètre. Le tube 17 constituant le tronçon retour est décalé radialement vers l'intérieur par rapport aux tubes 11 qui l'entourent.

Un prolongement tubulaire 38 formant injecteur, en saillie dans le tube 17, est coaxial à l'entonnoir 37 dont il est rendu solidaire par des manchons creux 39, orientés radialement, ouverts à chaque extrémité. Les manchons 39 débouchent vers l'extérieur dans l'espace où débouchent les tubes 11 et, vers l'intérieur, dans le prolongement 38 par des ouvertures de forme allongée. Le prolongement tubulaire 38 est fermé, du côté amont, par une ogive 40 qui dirige la partie recirculée des produits de combustion vers le tube 17 par des passages entourant les manchons 39 et compris entre la surface interne de l'entonnoir 37 et la surface externe de l'élément tubulaire 38.

Les tubes échangeurs 11 peuvent n'être soudés qu'à leur extrémité froide, l'embout 6" pouvant être maintenu par le tube intérieur 17.

Le fonctionnement du récupérateur de Fig. 9 est semblable à celui décrit pour les figures précédentes.

L'air de combustion circule à contre-courant dans les tubes 11 parallèlement au tube 17, pénètre dans la partie cylindrique 34 puis s'écoule radialement vers l'intérieur par les manchons 39 dans l'élément tubulaire 38 et est injecté axialement dans le tube 17 en sens inverse de l'écoulement dans les tubes 11.

Les produits de combustion passent pour partie dans l'espace annulaire 2 vers la sortie 10 et, pour une autre partie, directement dans les passages entre les manchons 39, avec un minimum de pertes de charge pour se mélanger dans le tube 17 avec l'air de combustion. Dans l'exemple de Fig.9, l'embout 6" comprend trois manchons 39 disposés à 120°.

Un rétrécissement de section à l'extrémité de l'injecteur 38 entraîne une augmentation de la vitesse de l'air qui provoque une aspiration des produits de combustion.

L'air de combustion circule dans les tubes 11 en sens opposé aux produits de combustion circulant dans la section 2 et améliore de ce fait les échanges thermiques entre les deux fluides et le profil de température du récupérateur, en diminuant les écarts de température entre une extrémité et l'extrémité opposée.

Les risques de casse rencontrés sur des récupérateurs classiques sont logiquement diminués en raison du mode de récupération à contre-courant entraînant des chocs thermiques moins violents.

Enfin, le fait de ne plus utiliser de pièce de fonderie permet de diminuer le risque de casse.

Le récupérateur/brûleur peut être isolé thermiquement lors de la fabrication, de sorte qu'il n'y a pas à prévoir d'isolation thermique sur site. L'assemblage sur site est réduit à trois brides de raccordement 27, B1, B2.

Le récupérateur selon l'invention permet à la fois d'accroître l'échange de chaleur air/fumées, ainsi que le taux de fumées recirculées, passant dans la canalisation d'alimentation 8. L'utilisation de tubes droits pour l'échangeur occasionne des pertes de charge limitées et maîtrisées.

Le choix des différents diamètres de tubes est conditionné à la fois par les performances thermiques, par les pertes de charge en ligne (épaisseur des tubes) mais également par la facilité d'approvisionnement des tubes. Pour ce fait, il conviendra d'opter pour des tubes standards du commerce.

La partie 9 des fumées dispose d'une section libre 1a importante de sorte que la vitesse des fumées y reste réduite. Alors que la perte de charge globale sur les fumées de combustion varie peu, quelle que soit la géométrie du circuit retour, celle-ci agit directement sur le taux de recirculation des fumées en modifiant la perte de charge sur la partie des fumées circulant dans la section libre 1 a.

Plus le volume de fumées recirculées est important et plus la vitesse des gaz dans le tube radiant est élevée. Cette augmentation de vitesse conduit néanmoins à faible variation de la perte de charge dans le tube.

La conception selon l'invention permet de séparer les fumées en amont de l'échangeur, ce qui entraîne :
- la mise en vitesse des fumées dans les passages autour des tubes échangeurs 11, pour accroître l'efficacité des échanges thermiques ;
- une limitation des pertes de charge sur les fumées recyclées avec accroissement de l'efficacité de l'éjecteur 18.

L'emploi de tubes 11, 13, 17, 17' selon l'invention permet de maîtriser les vitesses des fluides et donc de caler les échanges thermiques et la perte de charge de manière reproductible, ce qui n'est généralement pas le cas avec des récupérateurs classiques fabriqués en fonderie avec des différences notables sur les sections de passage dues aux tolérances de fabrication..

La circulation à contre-courant améliore l'échange thermique entre les fluides tout en réduisant les contraintes mécaniques par diminution du gradient de température entre les fumées et l'air de combustion à l'entrée du récupérateur.

La conception tubulaire permet en outre d'allonger le récupérateur ce qui se traduit par une plus grande surface d'échange et une meilleure récupération de chaleur.

Le récupérateur de l'invention, fabriqué par mécano-soudage, est plus léger qu'un récupérateur fabriqué en fonderie. De plus, la qualité de l'acier inoxydable réfractaire peut être ajustée pour chaque composant de l'ensemble récupérateur selon le niveau de température auquel il est soumis, ce qui permet de réduire globalement le prix matière du récupérateur.

## Revendications

1. Récupérateur de chaleur pour brûleur à tube radiant présentant une conduite de brûleur et une conduite d'échappement (1), le brûleur étant placé en entrée de la conduite de brûleur, le récupérateur étant disposé en sortie de la conduite d'échappement, et comprenant un échangeur de chaleur (E) placé à l'intérieur d'un conduit de raccordement (1 b) prévu pour être relié à la conduite d'échappement (1) afin d' assurer un préchauffage à contre-courant de l'air de combustion par une partie (2) des fumées, l'échangeur (E) comportant :
- un tronçon aller (5) pour diriger l'air à préchauffer vers un embout (6, 6', 6") placé à l'extrémité du récupérateur du côté de l'arrivée des fumées,
- et un tronçon retour (7, 7") s'ouvrant vers une canalisation (8) d'alimentation en air du brûleur, l'embout (6, 6', 6") définissant un trajet pour inverser le sens d'écoulement de l'air de combustion et le diriger vers le tronçon retour,
l'ensemble étant prévu pour qu'une partie des fumées soit entraînée par, et se mélange avec, l'air de combustion,
l'échangeur de chaleur occupant une partie seulement de la section transversale du conduit de raccordement, l'autre partie restant libre pour le passage des fumées vers une évacuation,
**caractérisé en ce que** :
- le tronçon aller (5) de l'échangeur comporte une pluralité de tubes échangeurs (11), parallèles à l'axe du conduit de raccordement (1 b), pour !e passage de l'air de combustion, les fumées échangeant de la chaleur avec l'air au travers des tubes échangeurs, les deux fluides ayant des écoulements parallèles, en sens contraire,
- les tubes échangeurs (11) débouchent à l'intérieur de l'embout (6, 6', 6"),
- le circuit d'air est disposé en « épingle », les tubes échangeurs du tronçon aller (5) étant situés radialement à l'extérieur du tronçon retour (7, 7").

2. Récupérateur selon la revendication 1, **caractérisé en ce que** les tubes échangeurs (11) sont regroupés dans une zone de l'espace compris entre le tronçon retour (7, 7") et le conduit de raccordement (1 b) ou la conduite d'échappement (1).

3. Récupérateur selon la revendication 1 ou 2, **caractérisé en ce que** le tronçon retour (7,7") est formé par un tube (17, 17') de section transversale suffisante pour l'écoulement de l'air provenant des tubes échangeurs (11) et de la partie recirculée des fumées.

4. Récupérateur selon la revendication 3, **caractérisé en ce que** le tube (17) du tronçon de retour est relié de manière étanche à l'embout, l'autre extrémité axiale du tube (17) étant fermée, le tronçon retour (7) s'ouvrant transversalement par un éjecteur (18) placé en vis-à-vis de la canalisation (8) d'alimentation en air du brûleur.

5. Récupérateur selon la revendication 3, **caractérisé en ce que** le tube (17') du tronçon retour est ouvert (23) du côté de l'arrivée des fumées et que l'embout (6') comporte une sortie (22) recourbée en forme de crosse regroupant les débits des tubes collecteurs et débouchant dans l'extrémité ouverte (23) du tronçon retour, dans lequel s'effectue un mélange de l'air et d'une partie des fumées.

6. Récupérateur selon la revendication 5, **caractérisé en ce que** le tronçon retour (7), à sa sortie du conduit de raccordement, est recourbé (25).

7. Récupérateur selon la revendication 5 ou 6, **caractérisé en ce qu'**il comporte une canalisation d'entrée d'air (28) entourée d'une enveloppe tubulaire (29) fermée à son extrémité intérieure et ouverte, à son autre extrémité, dans une chambre (G) d'entrée d'air pour les tubes échangeurs, l'enveloppe tubulaire (29) étant entourée par des fumées, de sorte que l'air de combustion effectue un premier trajet aller retour de préchauffage avant d'entrer dans les tubes échangeurs (11).

8. Récupérateur selon l'une quelconque des revendications 1 à 3, **caractérisé en ce que** l'embout (6") comprend une partie cylindrique (34) prolongée en amont par un entonnoir (37) qui se raccorde au tube de mélange (17), l'entonnoir comportant dans sa partie centrale un prolongement tubulaire (38) formant injecteur pour l'air de combustion, ce prolongement étant supporté par des manchons (39) orientés radialement mettant en communication un espace annulaire où débouchent les tubes (11) de l'échangeur et l'intérieur du prolongement tubulaire (38).

9. Récupérateur selon l'une quelconque des revendications précédentes, **caractérisé en ce qu'**il est réalisé en mécano-soudage avec des éléments tubulaires et des pièces de tôle en acier inoxydable.

10. Récupérateur selon l'une quelconque des revendications précédentes, **caractérisé en ce qu'**un hélicoïde (30) est disposé dans au moins un tube échangeur (11).

11. Récupérateur selon l'une des revendications 1 à 4, **caractérisé en ce que** les tubes échangeurs (11) sont entourés par des tubes enveloppes (13), l'air de combustion circulant dans les tubes échangeurs (11) tandis que les fumées circulent dans les passages annulaires (D) compris entre les tubes échangeurs (11) et les tubes enveloppes (13).

12. Récupérateur selon la revendication 11, **caractérisé en ce qu'**une cloison (14) traversée de manière étanche par les tubes enveloppes (13) est prévue pour délimiter, à l'extrémité du conduit de raccordement, une chambre (15) reliée à l'évacuation des fumées, les tubes enveloppes (13) débouchant dans cette chambre.

13. Récupérateur selon l'une quelconque des revendications 1 à 4, **caractérisé en ce que** l'ensemble des tubes échangeurs (11) est entouré par une paroi enveloppe (20), et les fumées circulent dans la zone comprise entre la surface extérieure des tubes échangeurs et la paroi enveloppe.

14. Récupérateur selon l'une quelconque des revendications précédentes, **caractérisé en ce qu'**il comporte une conduite de dérivation pour court-circuiter une partie de l'air froid directement au brûleur sans passer par le récupérateur tant que le tube radiant n'a pas atteint la température d'auto-inflammation du combustible, avec un organe de sectionnement (21) prévu sur l'air destiné à l'allumage du brûleur.

15. Récupérateur selon l'une quelconque des revendications précédentes, **caractérisé en ce que** les tubes échangeurs ont des diamètres différents, le diamètre étant plus important en partie supérieure et plus faible en partie inférieure.

16. Récupérateur selon l'une quelconque des revendications précédentes, **caractérisé en ce que** les tubes échangeurs ne sont soudés qu'à une extrémité, l'extrémité chaude reliée à l'embout, tandis qu'à l'autre extrémité ils sont engagés de manière coulissante étanche dans une paroi.

## Patentansprüche

1. Wärmerekuperator für einen Strahlungsrohrbrenner mit einer Brennerleitung und einer Abgasleitung (1), wobei der Brenner am Einlass der Brennerleitung angeordnet ist, wobei der Rekuperator am Auslass der Abgasleitung angeordnet ist, und mit einem Wärmetauscher (E), der im Inneren einer Verbindungsleitung (1b) angeordnet ist, die zur Verbindung mit der Abgasleitung (1) vorgesehen ist, um eine Gegenstrom-Vorwärmung der Verbrennungsluft durch einen Teil (2) der Rauchgase zu gewährleisten, wobei der Tauscher (E) aufweist:
- einen Vorlaufabschnitt (5) zum Leiten der vorzuwärmenden Luft zu einem Stutzen (6, 6', 6"), der am Ende des Rekuperators auf der Rauchgaseintrittsseite angeordnet ist,
- und einen Rücklaufabschnitt (7, 7'), der sich zu einer Leitung (8) für die Luftzufuhr des Brenners öffnet, wobei der Stutzen (6, 6', 6") einen Weg für die Umkehr der Strömungsrichtung der Verbrennungsluft und zum Leiten derselben in Richtung des Rücklaufabschnitts bildet,
wobei die Anordnung dazu vorgesehen ist, dass ein Teil der Rauchgase von der Verbrennungsluft mitgenommen wird und sich mit dieser vermischt,
wobei der Wärmetauscher lediglich einen Teil des Querschnitts der Verbindungsleitung einnimmt, während der andere Teil für den Durchtritt der Rauchgase in Richtung eines Auslasses frei bleibt,
**dadurch gekennzeichnet, dass**:
- der Vorlaufabschnitt (5) des Tauschers mehrere, zur Achse der Verbindungsleitung (1b) parallele Tauscherrohre (11) für den Durchtritt der Verbrennungsluft aufweist, wobei die Rauchgase mit der Luft über die Tauscherrohre Wärme tauschen, wobei die beiden Fluide parallele, einander entgegengesetzte Strömungen aufweisen,
- die Tauscherrohre (11) in das Innere des Stutzens (6, 6', 6"), münden,
- der Luftkreislauf haarnadelförmig angeordnet ist, wobei die Tauscherrohre des Vorlaufabschnitts (5) sich in Bezug auf den Rücklaufabschnitt (7, 7') radial außen befindet.

2. Rekuperator nach Anspruch 1, **dadurch gekennzeichnet, dass** die Tauscherrohre (11) in einer Zone des Raumes zusammengefasst sind, der zwischen dem Rücklaufabschnitt (7, 7') und der Verbindungsleitung (1b) oder der Auslassleitung (1) liegt.

3. Rekuperator nach Anspruch 1 oder 2, **dadurch gekennzeichnet, dass** der Rücklaufabschnitt (7, 7') durch ein Rohr (17, 17') gebildet ist, dessen Querschnitt für den von den Tauscherrohren (11) kommenden Luftstrom und den rückgeführten Teil der Rauchgase ausreicht.

4. Rekuperator nach Anspruch 3, **dadurch gekennzeichnet, dass** das Rohr (17) des Rücklaufabschnitts dicht mit dem Stutzen verbunden ist, wobei das andere axiale Ende des Rohres (17) geschlossen ist, wobei der Rücklaufabschnitt (7) sich in Querrichtung durch einen Ejektor (18) öffnet, welcher der Leitung (8) für die Luftzufuhr des Brenners gegenüberliegend angeordnet ist.

5. Rekuperator nach Anspruch 3, **dadurch gekennzeichnet, dass** das Rohr (17') des Rücklaufabschnitts auf der Seite des Rauchgaseintritts offen (23) ist, und dass der Stutzen (6') einen bogenförmig gebogenen Auslass (22) aufweist, welcher die Durchsätze der Sammelrohre zusammenfasst und in das offene Ende (23) des Rücklaufabschnitts mündet, in welchem eine Vermischung der Luft und eines Teils der Rauchgase erfolgt.

6. Rekuperator nach Anspruch 5, **dadurch gekennzeichnet, dass** der Rücklaufabschnitt (7) an seinem Austritt aus der Verbindungsleitung gebogen (25) ist.

7. Rekuperator nach Anspruch 5 oder 6, **dadurch gekennzeichnet, dass** er eine Lufteintrittsleitung (28) aufweist, die von einer rohrförmigen Ummantelung (29) umgeben ist, welche an ihrem inneren Ende geschlossen ist und an ihren anderen Ende in eine Lufteintrittskammer (G) für die Tauscherrohre offen ist, wobei die rohrförmige Ummantelung (29) derart von Rauchgasen umgeben ist, dass die Verbrennungsluft einen ersten Vorlauf- und Rücklaufweg zum Vorwärmen zurücklegt, bevor sie in die Tauscherrohre (11) eintritt.

8. Rekuperator nach einem der Ansprüche 1 bis 3, **dadurch gekennzeichnet, dass** der Stutzen (6") einen zylindrischen Teil (34) aufweist, der stromaufwärts durch einen Trichter (37) verlängert ist, der an das Mischrohr (17) angeschlossen ist, wobei der Trichter in seinem Mittelteil eine rohrförmige Verlängerung (38) aufweist, die eine Verbrennungslufteinspritzdüse bildet, wobei diese Verlängerung durch radial gerichtete Hülsen (39) gestützt ist, welche einen Ringraum, in welchen die Rohre (11) des Tauschers münden, und das Innere der rohrförmigen Verlängerung (38) miteinander verbinden.

9. Rekuperator nach einem der vorhergehenden Ansprüche, **dadurch gekennzeichnet, dass** er durch Maschinenschweißen von rohrförmigen Elementen und Teilen aus Edelstahlblech gebildet ist.

10. Rekuperator nach einem der vorhergehenden Ansprüche, **dadurch gekennzeichnet, dass** eine Wendel (30) in mindestens einem Tauscherrohr (11) angeordnet ist.

11. Rekuperator nach einem der Ansprüche 1 bis 4, **dadurch gekennzeichnet, dass** die Tauscherrohre (11) von Mantelrohren (13) umgeben sind, wobei die Verbrennungsluft in den Tauscherrohren (11) umläuft, während die Rauchgase in den ringförmigen Durchlässen (D) zwischen den Tauscherrohren (11) und den Mantelrohren (13) umlaufen.

12. Rekuperator nach Anspruch 11, **dadurch gekennzeichnet, dass** eine Trennwand (14), welche dicht von den Mantelrohren (13) durchquert wird, vorgesehen ist, um am Ende der Verbindungsleitung eine Kammer (15) zu begrenzen, die mit dem Rauchgasauslass verbunden ist, wobei die Mantelrohre (13) in diese Kammer münden.

13. Rekuperator nach einem der Ansprüche 1 bis 4, **dadurch gekennzeichnet, dass** die Anordnung der Tauscherrohre (11) von einer Mantelwand (20) umgeben ist, und die Rauchgase in der Zone zwischen der Außenfläche der Tauscherrohre und der Mantelwand umlaufen.

14. Rekuperator nach einem der vorhergehenden Ansprüche, **dadurch gekennzeichnet, dass** er eine Abzweigleitung aufweist, um einen Teil der kalten Luft direkt zum Brenner abzuzweigen, ohne den Rekuperator zu durchlaufen, solange das Strahlungsrohr die Brennstoff-Selbstentzündungstemperatur nicht erreichet hat, mit einem Trennelement (21), das für die zum Entzünden des Brenners bestimmte Luft vorgesehen ist.

15. Rekuperator nach einem der vorhergehenden Ansprüche, **dadurch gekennzeichnet, dass** die Tauscherrohre unterschiedliche Durchmesser aufweisen, wobei der Durchmesser im oberen Teil größer und im unteren Teil kleiner ist.

16. Rekuperator nach einem der vorhergehenden Ansprüche, **dadurch gekennzeichnet, dass** die Tauscherrohre nur an einem Ende, dem mit dem Stutzen verbundenen warmen Ende, geschweißt sind, während sie am anderen Ende gleitend verschiebbar dicht in eine Wand eingesetzt sind.

## Claims

1. A heat recuperator for a radiant tube burner having a burner pipe and an exhaust pipe (1), the burner being positioned at the inlet of the burner pipe, the recuperator being positioned at the outlet of the exhaust pipe, and comprising a heat exchanger (E) positioned inside a connecting pipe (1b) designed to be connected to the exhaust pipe (1) so as to perform counter-current preheating of the combustion air by part (2) of the flue gases, the exchanger (E) comprising:
- an outbound section (5) for directing the air that is to be preheated toward a ferrule (6, 6', 6" ; ) positioned at the end of the recuperator at the flue gas inlet end,
- and a return section (7, 7") opening toward a line (8) supplying the burner with air, the ferrule (6, 6', 6") defining a path for reversing the direction of flow of the combustion air and directing it toward the return section,
the assembly being designed so that part of the flue gases is entrained by and mixed with the combustion air,
the heat exchanger occupying just part of the cross section of the connecting pipe, the other part remaining free for the passage of the flue gases toward a discharge,
**characterized in that**:
- the outbound section (5) of the exchanger comprises a plurality of exchanger tubes (11) which are parallel to the axis of the connecting pipe (1b), for the passage of the combustion air, the flue gases exchanging heat with the air across the exchanger tubes, the two fluids having parallel flows in opposite directions,
- the exchanger tubes (11) open to the inside of the ferrule (6, 6', 6"),
- the air circuit is configured in a "hairpin" shape, the exchanger tubes of the outbound section (5) being situated radially on the outside of the the return section (7, 7",).

2. The recuperator as claimed in claim 1, **characterized in that** the exchanger tubes (11) are grouped together in a region of the space contained between the return section (7, 7") and the connecting pipe (1b) or the exhaust pipe (1).

3. The recuperator as claimed in claim 1 or 2, **characterized in that** the return section (7, 7") is formed of a tube (17, 17') of a cross section large enough for the flow of the air from the exchanger tubes (11) and of the recirculated part of the flue gases.

4. The recuperator as claimed in claim 3, **characterized in that** the tube (17) of the return section is connected fluidtightly to the ferrule, the other axial end of the tube (17) being closed, the return section (7) opening out transversely by an ejector (18) positioned facing the line (8) supplying the burner with air.

5. The recuperator as claimed in claim 3, **characterized in that** the tube (17') of the return section is opened (23) at the flue gas inlet end and **in that** the ferrule (6') has a curved crook-shaped outlet (22) that combines the flows of the collecting tubes and opens into the open end (23) of the return section, in which the air and part of the flue gases become mixed.

6. The recuperator as claimed in claim 5, **characterized in that** the return section (7) is curved (25) at its outlet from the connecting pipe.

7. The recuperator as claimed in claim 5 or 6, **characterized in that** it comprises an air inlet line (28) surrounded by a tubular jacket (29) closed at its inner end and open at its other end into an air inlet chamber (G) for the exchanger tubes, the tubular jacket (29) being surrounded by flue gases so that the combustion air makes a first, preheating, outward and return trip before entering the exchanger tubes (11).

8. The recuperator as claimed in any one of claims 1 to 3, **characterized in that** the ferrule (6") comprises a cylindrical part (34) extended upstream by a funnel (37) which is connected to the mixing tube (17), the funnel in its central part comprising a tubular extension (38) that forms an injector for the combustion air, this extension being supported by radially directed cuffs (39) placing an annular space into which the exchanger tubes (11) open in communication with the inside of the tubular extension (38).

9. The recuperator as claimed in any one of the preceding claims, **characterized in that** it is of all-welded construction with tubular elements and sheet metal components made of stainless steel.

10. The recuperator as claimed in any one of the preceding claims, **characterized in that** a helicoid (30) is positioned in at least one exchanger tube (11).

11. The recuperator as claimed in one of claims 1 to 4, **characterized in that** the exchanger tubes (11) are surrounded by jacket tubes (13), the combustion air flowing through the exchanger tubes (11) while the flue gases flow through the annular passages (D) contained between the exchanger tubes (11) and the jacket tubes (13).

12. The recuperator as claimed in claim 11, **characterized in that** a partition (14) through which the jacket tubes (13) pass in a fluidtight manner is provided for the purposes of delimiting, at the end of the connecting pipe, a chamber (15) connected to the flue gas discharge, the jacket tubes (13) opening into this chamber.

13. The recuperator as claimed in any one of claims 1 to 4, **characterized in that** the collection of exchanger tubes (11) is surrounded by a jacket wall (20) and the flue gases flow through the region contained between the exterior surface of the exchanger tubes and the jacket wall.

14. The recuperator as claimed in any one of the preceding claims, **characterized in that** it comprises a bypass pipe for short-circuiting part of the cold air directly to the burner without passing via the recuperator as long as the radiant tube has not reached the self-ignition temperature of the fuel, with a shutoff member (21) provided on the air intended for igniting the burner.

15. The recuperator as claimed in any one of the preceding claims, **characterized in that** the exchanger tubes have different diameters, the diameter being greater in the upper part and smaller in the lower part.

16. The recuperator as claimed in any one of the preceding claims, **characterized in that** the exchanger tubes are welded at just one end, the hot end connected to the ferrule, while at the other end they are engaged with a fluidtight sliding fit in a wall.
